# EUROPEAN PATENT APPLICATION

(11) **EP 0 863 090 A1**
(43) Date of publication of application: **09.09.1998**
(21) Application number: 97830091.1
(22) Date of filing: 04.03.1997
(51) Int. Cl.: B65D 90/00, B65D 88/12, B60J 7/10

(54) **Structure for supporting a cloth for covering open-top containers or tanks**

(71) Applicant: Sicom S.p.A., 12062 Cherasco (Cuneo) (IT)
(72) Inventor: Vitali, Felice, 12080 Briaglia (Cuneo) (IT)
(74) Representative: Gerbino, Angelo

(57) **Abstract**

A structure for supporting a cloth for covering open-top containers or tanks comprises a plurality of tubular support elements (16) which can be connected to two opposite side walls of a lorry container or tank. Each of the tubular elements has an articulation unit (18) for permanent connection to a side wall of the container or tank. The articulation unit is formed in a manner such as to allow the tubular support element (16) to pivot about two perpendicular axes (42, 58) generally parallel to the side (12).

## Description

The present invention relates to a structure for supporting a cloth for covering open-top containers or tanks.

Open-top lorry containers and tanks normally have a structure for supporting a covering cloth. In known solutions, the structure is formed by a plurality of tubular support elements, the ends of which are shaped so that they can be engaged removably in suitable seats of standardized shape and size provided along the top edges of the side walls of the containers or tanks. The tubular elements can be removed to allow the goods to be loaded and unloaded through the opening in the top of the container or tank.

During the loading and unloading of the goods, the tubular support members are frequently damaged, lost or removed in order to re-equip other containers or tanks the tubular cloth-support elements of which have in turn been damaged, lost or removed.

The object of the present invention is to provide an improved structure which can overcome all of the aforementioned problems.

According to the present invention, this object is achieved by the provision of a structure for supporting a cloth for covering open-topped containers or tanks, in which each of the aforementioned tubular elements has an articulation unit for permanent connection to one side wall of the container or tank, the articulation unit being formed in a manner such as to allow the tubular element to pivot about two perpendicular axes generally parallel to one side wall of the container or tank.

By virtue of this concept, during loading and unloading from above, the tubular elements can be arranged parallel to the top edge of the side wall to which the articulation unit is fixed. With the system according to the invention, the risk of the loss or removal of the tubular support elements is consequently eliminated and the risk of damage thereto is greatly reduced since the support elements are not physically separated from the container or tank.

Further characteristics and advantages of the present invention will become clear in the course of the following detailed description, given purely by way of non-limiting example, with reference to the appended drawings, in which:
Figure 1 is a schematic, perspective view showing a lorry container or tank provided with a support structure according to the present invention,
Figure 2 is a view taken on the arrow II of Figure 1, on an enlarged scale,
Figure 3 is an exploded, perspective view of the articulation unit, indicated by the arrow III in Figure 2,
Figures 4 and 5 are side elevational and plan views, respectively, of the articulation unit of Figure 3, and
Figure 6 is an exploded, perspective view showing a variant of the articulation unit shown in Figure 3.

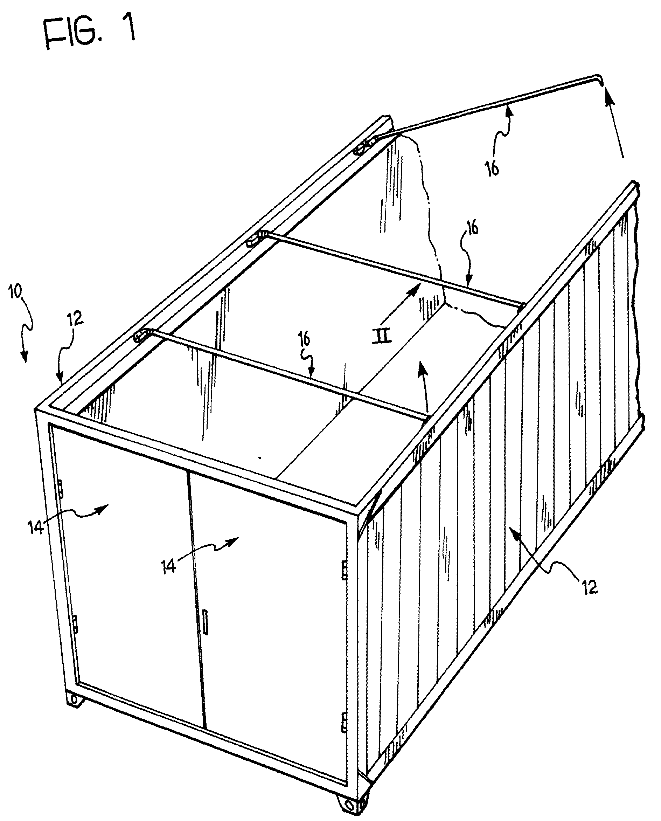

With reference to Figure 1, a lorry container or tank, indicated 10, comprises two sides 12, a rear wall having doors 14, a base, and a front wall. The upper portion of the container or tank 10 is open to allow goods to be loaded and unloaded from above. Upon completion of loading operations, the top opening is closed by a flexible covering cloth (not shown) which rests on a plurality of tubular support elements 16 extending transversely between the two sides 12.

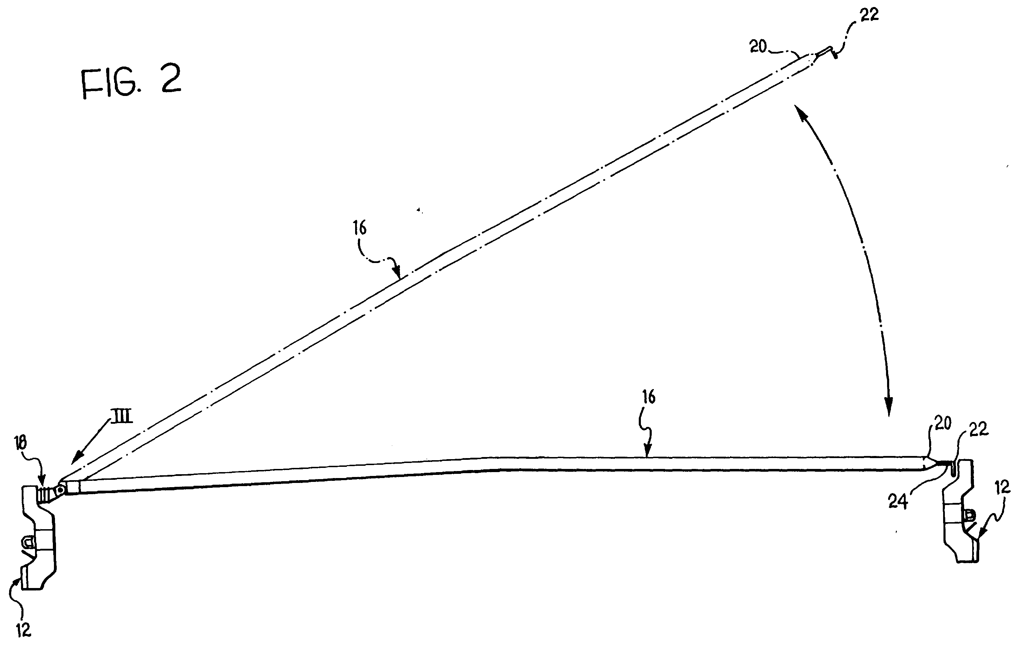

As can be seen in Figure 2, a first end of each tubular support element 16 is articulated permanently to a side 12 by means of an articulation unit 18 which will be described in greater detail below. The second end 20 of each tubular support element 16 has a right-angled engagement appendage 22 for engaging a seat 24 of standardized shape and size provided on the side 12 opposite that to which the articulation unit 18 is fixed.

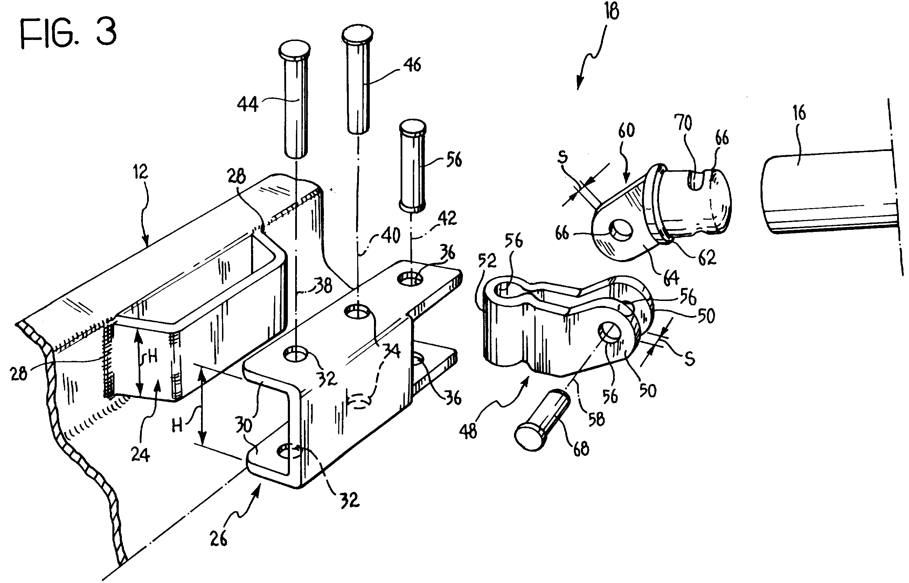

With reference to Figures 3 to 5, the articulation unit 18 comprises a base 26 which is fixed permanently to a seat 24 of the side 12, identical to the seat 24 for housing the right-angled engagement appendage 22 of the tubular element 16 on the opposite side. The seat 24 is formed from a generally U-shaped piece of sheet metal welded along the sides indicated 28 to a side member forming part of the side 12.

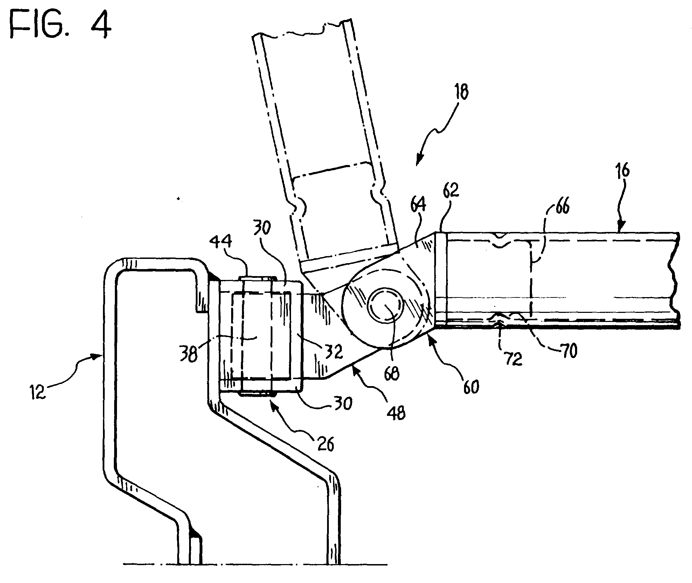

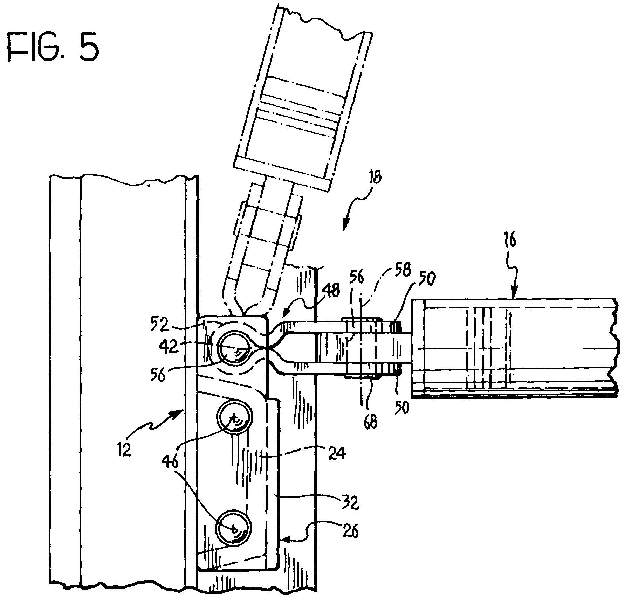

The base 26 is constituted by two metal flanges 30 connected to one another by a plate 32. The flanges 30 are spaced apart by a distance H which is equal to or slightly greater than the height of the U-shaped bracket constituting the seat 24. Three holes 32, 34, 36, centred on axes 38, 40 and 42, are formed in each flange 30. The plate 32 is shorter than the flanges 30 in order to leave a space free around the axis 42. The base 26 is fixed to the seat 24 by means of a pair of pins 44, 46 which are inserted in the holes 32 and 34. As can be seen in Figures 4 and 5, after assembly, the pins 44 and 46 are disposed inside the seat 24. The free ends of the pins 44, 46 are upset to prevent them from coming out.

Still with reference to Figures 3 to 5, a first articulation element 48 is articulated to the base 26 about the axis 42. The first articulation element 48 is constituted by a piece of sheet metal shaped so as to have two flanges 50 separated by a distance S and an articulation portion 52 with a through seat 54 having a cylindrical profile. The element 48 is articulated to the base 26 by means of a pin 56 which engages the holes 36 and the seat 54, leaving the articulation element 58 free to pivot about the axis 42 relative to the base 26. The pin 56 is upset after assembly to prevent it from coning out. The first articulation element 48 has a pair of holes 56 aligned along an axis 58 perpendicular to the axis 42.

The articulation unit 18 also includes a second articulation element 60 connected to the first articulation element 48 so as to be pivotable about the axis 58. The second articulation element 60 has a central circumferential flange 62 from which a flat appendage 64 and a cylindrical appendage 66 project. The flat appendage 64 has a thickness S such that it can move with clearance between the two flanges 50 of the first articulation element 48. The flat appendage 64 has a hole 66 which serves for the articulation of the element 60 to the element 48. This articulation is achieved by means of a pin 68 which engages the holes 56 of the element 48 and the hole 66 of the element 60. After assembly, the pin 68 is upset to prevent it from coming out.

The cylindrical appendage 66 of the second articulation element 60 has a diameter substantially equal to the inside diameter of the tubular element 16 and has a circumferential groove 70. The tubular element 16 is fitted on the cylindrical appendage 66 and is squashed radially in the region of the circumferential groove 70 so as to form an annular engagement portion indicated 72 in Figure 4. This type of connection has the advantage that it does not require welding, which would damage the protective zinc coating preferably provided on the tubular element 16 as well as on the elements which make up the articulation unit 18. The articulation unit 18 described above allows the tubular element 16 to pivot both about the horizontal axis 58 and about the vertical axis 42. Thus, for loading and unloading from above, the tubular support elements can easily be placed in a position in which they extend parallel to the upper edge of the side 12 to which the articulation units 18 are fixed. The support elements 16 always remain an integral part of the container or tank and cannot be lost or removed.

One of the advantages of the solution according to the present invention is that it does not require any modification of existing containers or tanks, given that the articulation units 18 are fixed to the seats 24 already existing in the containers or tanks.

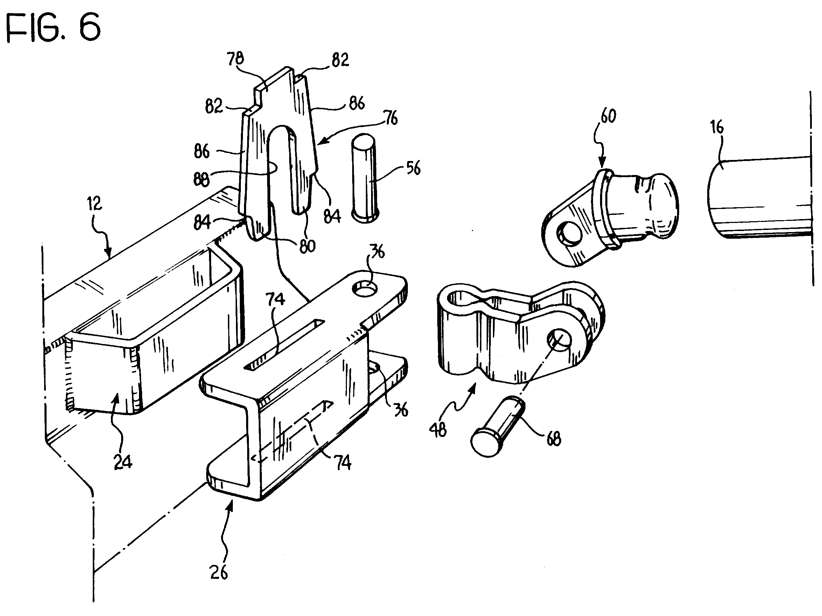

The articulation unit according to the present invention can be modified in various ways without departing from the scope of the present invention. For example, Figure 6 shows an alternative, simplified system for fixing the base 26 to the seat 24. In Figure 6, elements similar to those described above are indicated by the same reference numerals. In the version of Figure 6, instead of having holes for the passage of pins to be upset, the flanges 30 of the base 26 have two aligned slots 74 for housing a fixing plate 76. In the assembled configuration, the fixing plate 76 is disposed inside the seat 24 and simultaneously engages the two slots 74 of the base 26. More precisely, the upper appendage 78 of the fixing plate 76 engages the upper slot 74, whereas the two lower appendages 80 engage the lower slot 74. Shoulders 82 and 84 prevent the fixing plate 76 from coming out. The fixing plate 76 also has a central hole 88 and inclined lateral surfaces 86 which enable the plate 76 to yield resiliently during its insertion in the slots 74. In comparison with the solution illustrated in Figures 3 to 5, the solution of Figure 6 has the advantage that it does not require upsetting of the pins in order to fix the articulation unit to the container or tank. This solution is therefore also suitable for fitting by unskilled personnel and, moreover, can be fitted where an equipped workshop is not available.

## Claims

1. A structure for supporting a cloth for covering open-top containers or tanks, comprising a plurality of tubular support elements (16) which can be connected to two opposite sides (12) of a lorry container or tank, characterized in that each of the tubular elements (16) has an articulation unit (18) for permanent connection to a side (12) of the container or tank (10), the articulation unit (18) being formed in a manner such as to allow the tubular element (16) to pivot about two perpendicular axes (42, 58) generally parallel to the side (12).

2. A structure according to Claim 1, characterized in that the articulation unit (18) comprises a base (26) for fixing to the side (12), a first articulation element (48) pivotable relative to the base (26) about a vertical axis (42), and a second articulation element (60) pivotable relative to the first articulation element (48) about a horizontal axis (58).

3. A structure according to Claim 2, characterized in that the second articulation element has a cylindrical appendage (66) which is inserted in an end portion of the tubular element (16) and which is fixed thereto by radial plastic deformation of the tube (16).

4. A structure according to Claim 2, characterized in that the base (26) has two parallel flanges (30) which are disposed, respectively, above and below a U-shaped bracket (24) fixed to the side (12) of the container or tank.

5. A structure according to Claim 4, characterized in that the base (26) is fixed to the U-shaped bracket (24) by means of a pair of upset pins (44, 46).

6. A structure according to Claim 4, characterized in that the base (26) is fixed to the U-shaped bracket (24) by means of a fixing plate (76) which engages a pair of slots (74) formed in the flanges (30) of the base (26).

7. A structure according to Claim 2, characterized in that the first articulation element has two flanges (50) between which a flat appendage (64) of the second articulation element (60) is articulated.

8. A structure according to Claim 3, characterized in that the first articulation element (48) has an articulation portion (52) with a cylindrical seat (54) which is interposed between the flanges (30) of the base (26).
